(19) Europäisches Patentamt
European Patent Office
Office européen des brevets

(11) **EP 2 157 641 B1**

(12) **EUROPÄISCHE PATENTSCHRIFT**

(45) Veröffentlichungstag und Bekanntmachung des Hinweises auf die Patenterteilung:
**21.05.2014   Patentblatt 2014/21**

(51) Int Cl.:
*H01M 4/66* (2006.01)     *H01M 4/68* (2006.01)

(21) Anmeldenummer: **09166612.3**

(22) Anmeldetag: **28.07.2009**

(54) **Verfahren zur Herstellung einer Bipolarplatte und Bipolarplatte für eine bipolare Bleisäurebatterie**

Method for producing a bipolar plate and bipolar plate for a bipolar lead-acid battery

Procédé de fabrication d'une plaque bipolaire et plaque bipolaire pour une batterie bipolaire au plomb

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.07.2008   DE 102008036319**

(43) Veröffentlichungstag der Anmeldung:
**24.02.2010   Patentblatt 2010/08**

(60) Teilanmeldung:
**12163291.3 / 2 487 739**

(73) Patentinhaber: **ElringKlinger AG**
**72581 Dettingen (DE)**

(72) Erfinder:
• **Schlipf, Michael**
**DE/84508 Burgkirchen (DE)**
• **Zahn, Helmut**
**89520, Heidenheim (DE)**

(74) Vertreter: **Boehme, Ulrich**
**HOEGER, STELLRECHT & PARTNER**
**Patentanwälte**
**Uhlandstrasse 14 c**
**70182 Stuttgart (DE)**

(56) Entgegenhaltungen:
US-A- 4 713 306     US-A- 4 892 797
US-A- 5 348 817     US-A- 5 800 946
US-B1- 6 500 585

**Beschreibung**

Die vorliegende Erfindung betrifft ein Verfahren zur Herstellung einer Bipolarplatte für eine bipolare Bleisäurebatterie.

Herkömmliche Bleisäurebatterien werden aus monopolaren Platten aufgebaut. Mit diesen Systemen werden Leistungsdichten von maximal 250 W/kg erreicht.

Für viele Anwendungen (beispielsweise in Hybrid-Elektrofahrzeugen) werden jedoch höhere Leistungsdichten (von mehr als 600 W/kg) gefordert. Diese höheren Leistungsdichten sind nur durch einen bipolaren Batterieaufbau realisierbar.

Eine Bleisäurebatterie mit einem solchen bipolaren Batterieaufbau ist beispielsweise in der WO 98/40920 offenbart.

Wesentlicher Bestandteil einer solchen bipolaren Batterie sind Bipolarplatten, welche elektrisch leitfähig sind und aufeinanderfolgende permeable Separatoren, die mit Elektrolyt gefüllt sind, voneinander trennen.

Für Aufbau und Herstellung solcher Bipolarplatten sind die folgenden Möglichkeiten aus dem Stand der Technik bekannt:

- Die Bipolarplatte kann ein Substrat aus einem Metall, beispielsweise Titan oder Eisen mit einer Nickelbeschichtung, oder aus einer Metalllegierung umfassen.

- Alternativ hierzu kann das Substrat der Bipolarplatte auch aus einer elektrisch leitfähigen Keramik, beispielsweise Ti4O9, bestehen.

- Ferner kann das Substrat der Bipolarplatte aus einem mit graphitierten Kohlefasern verstärkten Polymer bestehen. Dieser Verbund wird durch Lösen des Polymers, Eingießen des Polymers in die graphitierte Kohlefasermatte und anschließendes Verpressen der getränkten Kohlefasermatten hergestellt. Auf diesen Polymerverbund wird dann durch elektrolytische Abscheidung beidseitig eine elektrisch leitfähige, metallhaltige Schicht, beispielsweise eine Bleischicht, aufgebracht.

Bei diesem Herstellungsverfahren für die Bipolarplatte muss jedoch auf lösliche Polymere zurückgegriffen werden, wodurch die Auswahl an geeigneten Kandidaten sehr eingeschränkt ist.

Ferner weisen lösliche Polymere häufig nur eine eingeschränkte chemische Beständigkeit auf.

Das Herstellverfahren unter Verwendung löslicher Polymere ist aufgrund des Zwangs zur Verwendung von geeigneten Lösemitteln aus Gründen des Personen- und Umweltschutzes bedenklich.

Ferner hat es sich als unmöglich erwiesen, auf dem Polymerverbund aus polymerbefüllten Kohlefasermatten durch ein elektrolytisches Abscheideverfahren eine vollständig porenfreie Pb-Schicht zu erzeugen. Die nach einem solchen Verfahren hergestellte Pb-Schicht zeigt aufgrund des Vorhandenseins von Poren im Betrieb der Bipolarplatte in der Bleisäurebatterie, insbesondere auf der Anodenseite, eine starke Neigung zur Korrosion und/oder zum Lochfraß.

Da elektrolytische Abscheideverfahren auf der Basis von Nernst-Potentialen entsprechend der elektrochemischen Spannungsreihe ablaufen, ist eine gezielte Legierung der Pb-Schicht nach Art und Gehalt mit weiteren Metallen nur eingeschränkt oder gar nicht möglich. Ferner weisen elektrolytisch abgeschiedene Bleischichten typischerweise eine sehr rauhe Oberfläche auf.

Die US 5 800 946 A offenbart ein Verfahren gemäß dem Oberbegriff von Anspruch 1, wobei das Substrat ein metallisches Gitter oder Vlies umfasst, das in eine Polymer-Matrix eingebettet ist.

Die US 4 892 797 A offenbart ein Verfahren zur Herstellung einer Bipolarplatte, die eine Folie aus einer Aluminiumlegierung und eine Folie aus einem Kunststoffmaterial enthält, in welchem mit Silber beschichtete Nickel-Partikel dispergiert sind.

Der vorliegenden Erfindung liegt die Aufgabe zugrunde, ein Verfahren zur Herstellung einer Bipolarplatte für eine bipolare Bleisäurebatterie zu schaffen, welches auch in der Großserie zuverlässig und einfach durchführbar ist und verlässlich funktionierende Bipolarplatten liefert.

Diese Aufgabe wird erfindungsgemäß durch ein Verfahren zur Herstellung einer Bipolarplatte für eine bipolare Bleisäurebatterie nach Anspruch 1 gelöst.

Das erfindungsgemäße Verfahren bietet den Vorteil, dass durch das Auflaminieren der mindestens einen Folie aus metallhaltigem Material auf das Substrat eine metallhaltige Schicht mit einer besonders hohen elektrochemischen Beständigkeit an der Bipolarplatte erzeugt wird.

Die auflaminierte metallhaltige Folie weist eine deutliche geringere Rauhigkeit der Oberfläche auf als eine nach einem elektrolytischen Abscheideverfahren erzeugte metallische Schicht. Ferner weist die auflaminierte Folie im Gegensatz zu einer nach dem elektrolytischen Abscheideverfahren erzeugten metallischen Schicht keine Poren auf.

Die auf diese Weise hergestellte Bipolarplatte kann durch Integration mit einem Gitter auf der Positivseite (im Folgenden als "positives Gitter" bezeichnet) und einem Gitter auf der Negativseite (im Folgenden als "negatives Gitter" bezeichnet) zu einer Bipolarzelle weiterverarbeitet werden.

Die metallhaltige Folie ist vorzugsweise überwiegend oder vollständig aus metallischem Material, vorzugsweise aus Blei oder einer Bleilegierung, gebildet.

Bei einer bevorzugten Ausgestaltung des erfindungsgemäßen Verfahrens ist vorgesehen, dass zwei Folien aus metallhaltigem Material bereitgestellt und mit einander gegenüberliegenden Seiten des Substrats laminiert werden.

Dabei kann das metallhaltige Material beider Folien miteinander identisch sein, oder die beiden Folien können aus unterschiedlichen metallhaltigen Materialien gebildet sein.

Vorzugsweise werden die beiden Folien aus metallhaltigem Material gleichzeitig mit den einander gegenüberliegenden Seiten des Substrats laminiert.

Es wird ein Substrat verwendet, das mindestens eine Folie aus einem Thermoplast-Compound, das mindestens ein Thermoplast-Material und mindestens einen elektrisch leitenden Füllstoff enthält, umfasst. Eine solche Folie kann in einfacher Weise durch Trockenmischung des Thermoplast-Materials und des mindestens einen elektrisch leitenden Füllstoffs hergestellt werden, wobei aus dem durch die Mischung erhaltenen Thermoplast-Compound in einem Heißpressverfahren ("Hot-Compression-Moulding"-Verfahren) ein vorzugsweise hohlzylindrischer Formkörper gebildet wird, aus dem mittels eines Schälverfahrens die elektrisch leitfähige Folie aus dem Thermoplast-Compound hergestellt wird.

Insbesondere wenn das Substrat der Bipolarplatte außer der Folie aus dem Thermoplast-Compound keinen weiteren Bestandteil enthält, ist es günstig, wenn die Folie aus dem Thermoplast-Compound beidseitig mit jeweils einer Folie aus metallhaltigem Material laminiert wird.

Alternativ oder ergänzend hierzu kann vorgesehen sein, dass ein Substrat für die Bipolarplatte verwendet wird, das mindestens ein elektrisch leitfähiges Vlies umfasst.

Ein solches Vlies kann insbesondere ein Kohlenstofffaser-Vlies sein.

Bei einer besonderen Ausgestaltung des erfindungsgemäßen Verfahrens kann vorgesehen sein, dass ein Substrat für die Bipolarplatte verwendet wird, das zwei Folien aus einem Thermoplast-Compound und ein dazwischen angeordnetes Vlies umfasst, beispielsweise ein Vlies aus graphitierten Kohlenstofffasern.

Das für das Thermoplast-Compound verwendete Thermoplast-Material kann ein Fluorthermoplast-Material enthalten und insbesondere vollständig aus einem oder mehreren Fluorthermoplast-Materialien bestehen.

Geeignete Fluorthermoplast-Materialien sind insbesondere PFA (Perfluoralkoxy-Copolymer), MFA (Tetrafluorethylen-Perfluormethylvinylether), FEP (Fluorethylenpropylen), ETFE (Ethylentetrafluorethylen), ECTFE (Ethylen-Chlortrifluorethylen), HTE (Terpolymer, hergestellt aus den Monomeren Hexafluorpropylen, Tetrafluorethylen und Ethylen), THV (Tetrafluorethylen-Hexafluorpropylen-Vinyliden-Fluorid), PVDF (Polyvinylidenfluorid) und/oder PFV (Polyvinylfluorid).

Alternativ oder ergänzend hierzu kann als Fluorthermoplast-Material auch ein schmelzverarbeitbares Tetrafluorethylen-Copolymer verwendet werden; solche schmelzverarbeitbaren Tetrafluorethylen-Copolymere sind insbesondere in der WO 00/08071 A2 und in der WO 01/60911 A1 beschrieben, auf welche insoweit ausdrücklich Bezug genommen und welche insoweit zum Bestandteil dieser Beschreibung gemacht werden.

Ferner kann das für das Thermoplast-Compound verwendete Thermoplast-Material einen nicht-fluorierten thermoplastischen Werkstoff, insbesondere Polypropylen (PP), enthalten und insbesondere vollständig aus einem oder mehreren nicht-fluorierten thermoplastischen Werkstoffen, insbesondere Polypropylen, bestehen.

Der elektrisch leitfähige Füllstoff des Thermoplast-Compounds kann insbesondere ein Leitpigment, beispielsweise Ruß, Kohlenstoff-Grieß und/oder Graphit, enthalten.

Als Folie aus metallhaltigem Material kann insbesondere eine Folie aus bleihaltigem Material verwendet werden.

Zur Stabilisierung gegen Oxidation kann die Legierung der Folie aus bleihaltigem Material einen Zusatz von Zinn (Sn) enthalten.

Bei einer bevorzugten Ausgestaltung der Erfindung ist vorgesehen, dass das Laminieren in einer beheizten Laminatpresse erfolgt.

Um zu erreichen, dass sich während des Laminiervorgangs keine Lufteinschlüsse zwischen den miteinander zu laminierenden Schichten bilden, welche zu Unebenheiten des gebildeten Laminats und zu Schwachstellen in der Verbindung der miteinander laminierten Schichten führen können, ist es günstig, wenn das Laminieren unter Vakuum erfolgt, vorzugsweise bei einem Vakuumdruck von höchstens ungefähr 10 mbar.

Grundsätzlich kann vorgesehen sein, dass das Laminieren unter einem zeitlich konstanten Anpressdruck durchgeführt wird.

Es hat sich allerdings als günstig erwiesen, wenn das Laminieren unter einem Anpressdruck durchgeführt wird, welcher während des Laminiervorgangs variiert.

Insbesondere kann vorgesehen sein, dass der Anpressdruck während einer Aufheizphase des Laminiervorgangs geringer ist als der Anpressdruck während einer Temperaturhaltephase des Laminiervorgangs.

Alternativ oder ergänzend hierzu kann auch vorgesehen sein, dass der Anpressdruck während einer Aufheizphase des Laminiervorgangs geringer ist als während einer Abkühlphase des Laminiervorgangs.

Um eine Beschädigung der mindestens einen metallhaltigen Folie während des Laminiervorgangs zu vermeiden, ist es von Vorteil, wenn mindestens eine Folie aus metallhaltigem Material während des Laminiervorgangs durch eine Schutzfolie abgedeckt wird.

Eine solche Schutzfolie kann insbesondere aus einem Fluorpolymermaterial, beispielsweise aus Polytetrafluorethylen (PTFE), gebildet sein.

Vorzugsweise ist vorgesehen, dass sich die Schutzfolie während des Laminiervorgangs nicht mit der Folie aus metallhaltigem Material verbindet, so dass das Laminat aus dem Substrat und aus der Folie aus metallhaltigem Material nach dem Laminiervorgang leicht von der Schutzfolie getrennt werden kann.

Die vorliegende Erfindung betrifft ferner eine Bipolarplatte für eine bipolare Batterie.

Der Erfindung liegt die weitere Aufgabe zugrunde, eine Bipolarplatte für eine bipolare Batterie zu schaffen, die auch in der Großserie zuverlässig und einfach herstellbar ist und im Betrieb der bipolaren Batterie verlässlich funktioniert.

Diese Aufgabe wird erfindungsgemäß durch eine Bipolarplatte für eine bipolare Batterie nach Anspruch 14 gelöst.

Diese Bipolarplatte wird vorzugsweise durch ein Verfahren nach einem der Ansprüche 1 bis 14 hergestellt.

Das erfindungsgemäße Verfahren zur Herstellung einer Bipolarplatte ist besonders umweltfreundlich und sorgt für eine besonders hohe chemische Beständigkeit der metallhaltigen Schicht an der Folie aus dem Thermoplast-Compound, welche als Substrat der Bipolarplatte oder als ein Bestandteil des Substrats der Bipolarplatte dient.

Die metallhaltige Schicht der erfindungsgemäß hergestellten Bipolarplatte weist insbesondere auf der Anodenseite eine besonders hohe chemische Beständigkeit und somit eine lange Lebensdauer auf.

Die erfindungsgemäß hergestellte Bipolarplatte eignet sich zur Verwendung in einer bipolaren Bleisäurebatterie.

Der bipolare Aufbau einer Bipolar-Bleisäurebatterie verringert den Bedarf an Blei bei gleicher Leistung und führt somit zu einem besonders umweltfreundlichen Endprodukt.

Weitere Merkmale und Vorteile der Erfindung sind Gegenstand der nachfolgenden Beschreibung und der zeichnerischen Darstellung von Ausführungsbeispielen.

In den Zeichnungen zeigen:

Fig. 1    eine in Längsrichtung geschnittene schematische Explosionsdarstellung einer Bipolar-Bleisäurebatterie mit einer negativen Endplatte, einer positiven Endplatte und einer Bipolarplatte, welche zusammen zwei 2-Volt-Einheiten bilden;

Fig. 2    einen schematischen Längsschnitt durch eine Bipolar-Bleisäurebatterie mit einer negativen Endplatte, einer positiven Endplatte und zwei Bipolarplatten, welche zusammen drei 2-Volt-Einheiten bilden;

Fig. 3    eine vergrößerte Darstellung des Bereichs I aus Fig. 2;

Fig. 4    eine schematische Draufsicht auf ein Gitter einer Bipolarzelle einer Bipolar-Bleisäurebatterie;

Fig. 5    einen schematischen Längsschnitt durch das Gitter aus Fig. 4, längs der Linie 5-5 in Fig. 4;

Fig. 6    eine schematische Draufsicht auf einen Abstandshalter (Spacer) einer 2-Volt-Einheit einer Bipolar-Bleisäurebatterie;

Fig. 7    einen schematischen Längsschnitt durch den Abstandshalter (Spacer) aus Fig. 6, längs der Linie 7-7 in Fig. 6;

Fig. 8    eine schematische Darstellung einer Verpressung eines Thermoplast-Compounds zu einem hohlzylindrischen Formkörper, vor einer Erwärmung des Formkörpers;

Fig. 9    eine schematische Darstellung einer Erwärmung des Thermoplast-Compound-Formkörpers aus Fig. 8 in einem Sinterofen;

Fig. 10   eine schematische Darstellung einer weiteren Verpressung des Thermoplast-Compound-Formkörpers aus den Fig. 8 und 9 nach der Entnahme aus dem Sinterofen;

Fig. 11   eine schematische Darstellung eines Laminiervorgangs zur Herstellung einer Bipolarplatte aus einem Kohlenstofffaser-Vlies, zwei Thermoplast-Compound-Folien und zwei Blei/Zinn-Folien; und

Fig. 12   eine schematische Darstellung eines Laminiervorgangs zur Herstellung einer Bipolarzelle aus einer Bipolarplatte sowie einem positiven Gitter und einem negativen Gitter.

Gleiche oder funktional äquivalente Elemente sind in allen Figuren mit denselben Bezugszeichen bezeichnet.

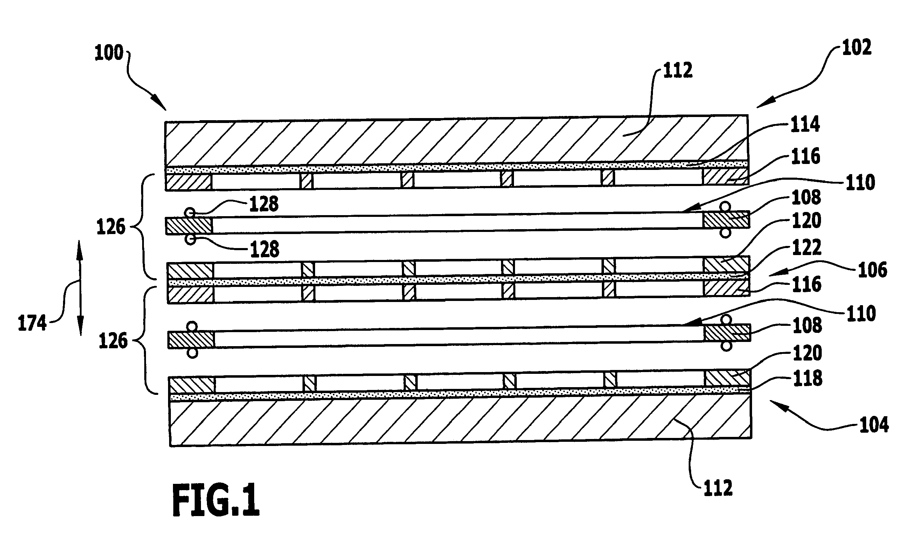

Eine in Fig. 1 schematisch dargestellte, als Ganzes mit 100 bezeichnete Bipolar-Bleisäurebatterie umfasst eine negative Endzelle 102, eine positive Endzelle 104, eine zwischen der negativen Endzelle 102 und der positiven Endzelle 104 angeordnete Bipolarzelle 106 sowie zwei jeweils zwischen der Bipolarzelle 106 und der negativen Endzelle 102 bzw. der positiven Endzelle 104 angeordnete Abstandshalter (im Englischen als "spacer" bezeichnet) 108.

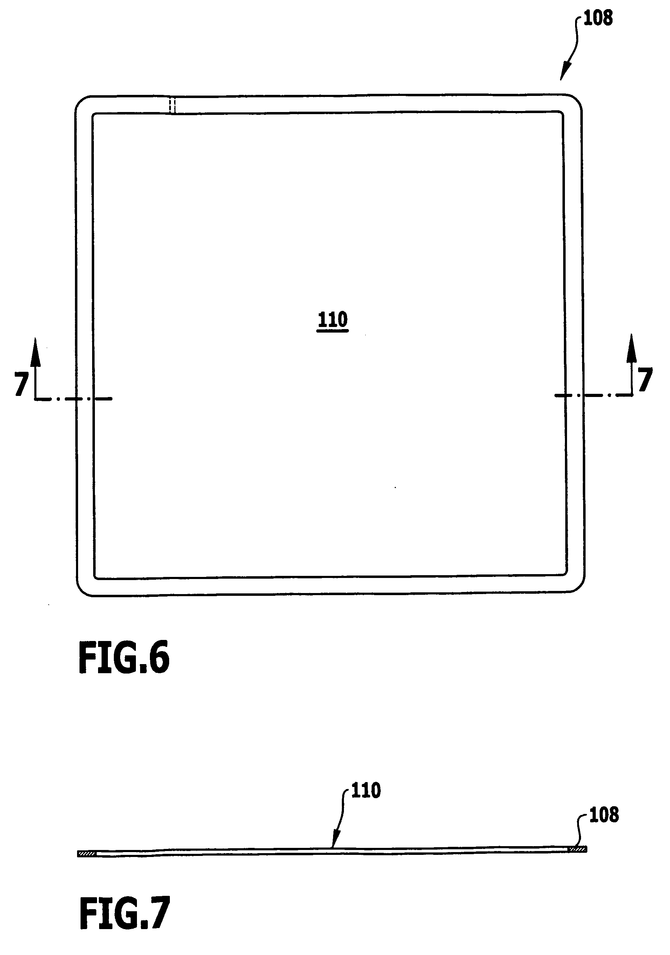

Jeder der Abstandshalter 108 ist im Wesentlichen rechteckig und rahmenförmig ausgebildet (siehe Fig. 6 und 7) und umgibt eine im Wesentlichen rechteckige, mittige Durchtrittsöffnung 110, in welcher im Betriebszustand der Bipolar-Bleisäurebatterie 100 jeweils ein Separator in Form einer (in den Figuren nicht dargestellten) Glasfasermatte aufgenommen ist, welche mit einem Elektrolyten, beispielsweise mit Schwefelsäure, getränkt ist.

Die negative Endzelle 102 umfasst eine außenseitig angeordnete Endplatte 112 (beispielsweise aus Aluminium), eine negative Platte 114 und ein negatives Gitter (im Englischen "grid" genannt) 116, welches dem Abstandshalter 108 und der Bipolarzelle 106 zugewandt ist.

Die positive Endzelle 104 umfasst eine außenseitig angeordnete Endplatte 112 (beispielsweise aus Aluminium), eine positive Platte 118 und ein positives Gitter (im Englischen "grid" genannt) 120, welches dem Abstandshalter 108 und der Bipolarzelle 106 zugewandt ist.

Die Bipolarzelle 106 umfasst eine mittig angeordnete Bipolarplatte 122, ein der negativen Endzelle 102 zugewandtes positives Gitter 120 und ein der positiven Endzelle 104 zugewandtes negatives Gitter 116.

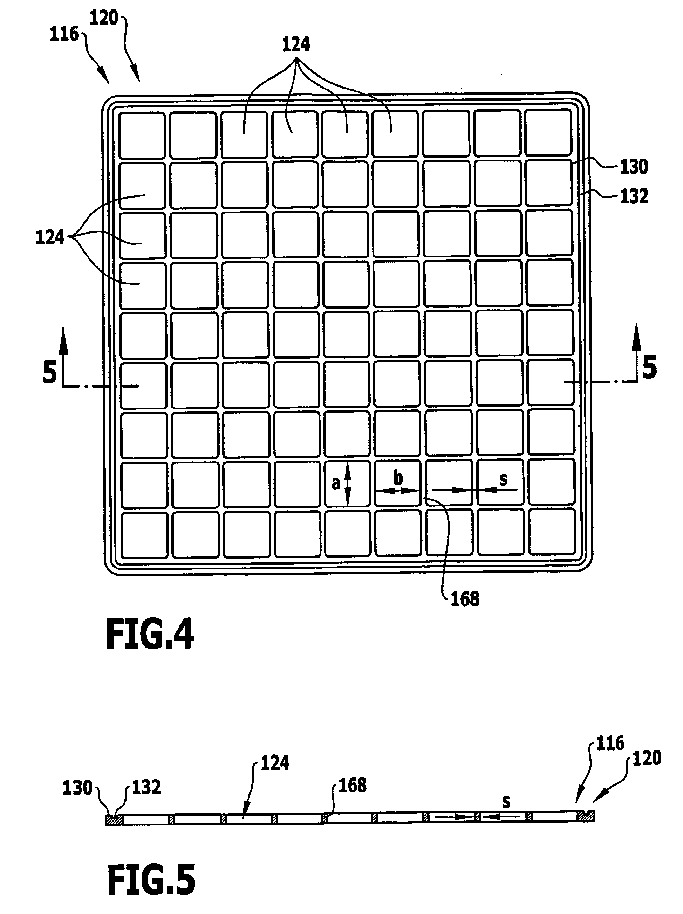

Wie aus Fig. 4 zu ersehen ist, welche schematisch ein negatives Gitter (Gitter für die Negativseite) 116 oder ein im Wesentlichen dieselbe Form aufweisendes positives Gitter (Gitter für die Positivseite) 118 zeigt, ist jedes dieser Gitter mit einer Vielzahl von ungefähr quadratischen Durchtrittsöffnungen 124 versehen, welche im Betrieb der Bipolar-Bleisäurebatterie 100 mit einer negativen bzw. einer positiven Paste gefüllt sind.

Die negative Paste, mit welcher das negative Gitter 116 befüllt ist, enthält insbesondere Blei.

Die positive Paste, mit welcher das positive Gitter 120 befüllt ist, enthält insbesondere Bleioxid.

Jeweils ein mit negativer Paste befülltes negatives Gitter 116, ein Abstandshalter 108 mit dem darin aufgenommenen Separator in Form einer elektrolytgetränkten Glasfasermatte und ein mit positiver Paste befülltes positives Gitter 120 bilden zusammen eine elektrochemische 2-Volt-Zelle 126.

Die in Fig. 1 dargestellte Bipolar-Bleisäurebatterie 100 umfasst somit zwei elektrochemische 2-Volt-Zellen und weist somit eine Nennspannung von insgesamt 4 Volt auf.

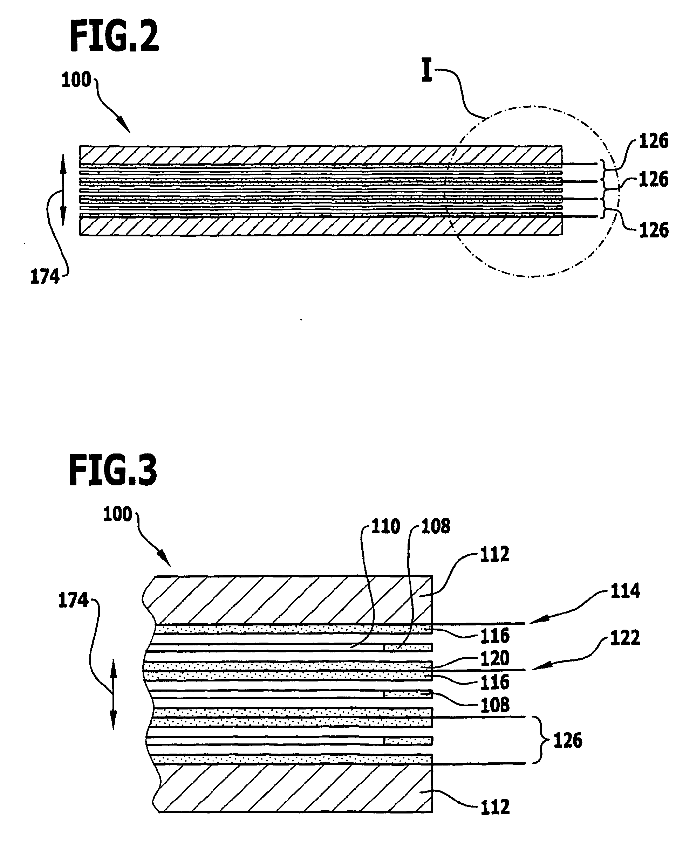

Im Gegensatz hierzu umfasst die in den Fig. 2 und 3 dargestellte alternative Ausführungsform einer Bipolar-Bleisäurebatterie 100 drei elektrochemische 2-Volt-Zellen 126 und weist somit eine Nennspannung von insgesamt 6 Volt auf.

Für jede zusätzliche elektrochemische 2-Volt-Zelle 126 wird der Bipolar-Bleisäurebatterie 100 eine zusätzliche Bipolarzelle 106 und ein zusätzlicher Abstandshalter 108 mit Separator zwischen der negativen Endzelle 102 und der positiven Endzelle 104 hinzugefügt.

Wie aus Fig. 1 zu ersehen ist, ist zur Abdichtung des Elektrolytraums zwischen jedem Abstandshalter 108 und dem jeweils benachbarten negativen Gitter 116 oder positiven Gitter 120 jeweils ein ringförmig umlaufendes Dichtelement 128 vorgesehen.

Jedes dieser Dichtelemente 128 kann beispielsweise aus einem Fluorelastomer, insbesondere aus Viton, gebildet sein.

Zur Aufnahme eines solchen Dichtelements 128 weist jedes negative Gitter 116 und jedes positive Gitter 120 auf seiner dem jeweils benachbarten Abstandshalter 108 zugewandten Stirnseite 130 eine ringförmig um die Durchtrittsöffnungen 124 des jeweiligen Gitters umlaufende Ringnut 132 auf (siehe die Fig. 4 und 5).

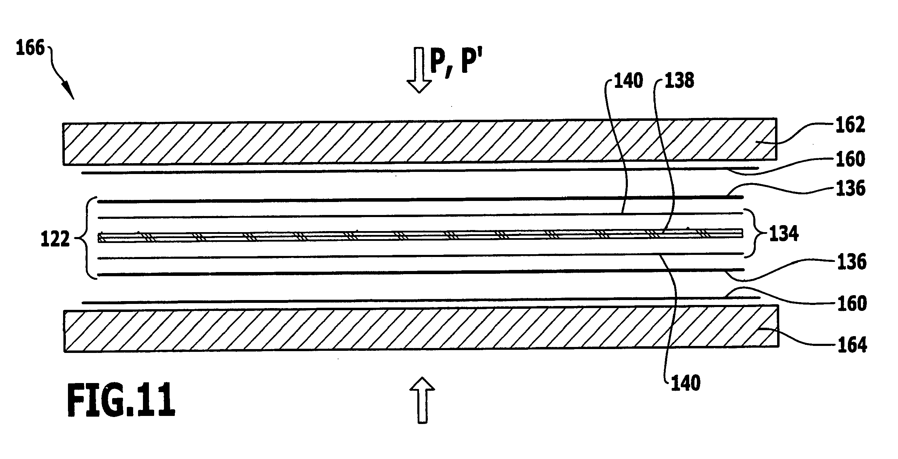

Jede Bipolarplatte 122 umfasst ein Substrat 134, welches beidseits mit jeweils einer metallhaltigen Folie 136 laminiert ist (siehe Fig. 11).

Das Substrat 134 der Bipolarplatte 122 kann, wie in Fig. 11 schematisch dargestellt, ein mittig angeordnetes Kohlenstofffaser-Vlies 138 und zwei beidseitig auf das Kohlenstofffaser-Vlies 138 auflaminierte elektrisch leitfähige Thermoplast-Compound-Folien 140 umfassen.

Alternativ hierzu kann das Substrat 134 auch aus einer einzigen, elektrisch leitfähigen Thermoplast-Compound-Folie 140 gebildet sein.

Zur Herstellung der elektrisch leitfähigen Thermoplast-Compound-Folie 140 wird wie folgt vorgegangen:

Ein Pulver eines Thermoplast-Materials mit einer mittleren Partikelgröße von beispielsweise ungefähr 5 $\mu$m bis ungefähr 500 $\mu$m wird mit einem elektrisch leitfähigen Füllstoff, beispielsweise einem Leitpigment in Form von Ruß ("carbon black"), mit einer mittleren Primärteilchengröße von beispielsweise ungefähr 1 nm bis ungefähr 100 nm im Trockenverfahren gemischt, um ein Thermoplast-Compound zu erhalten.

Dabei beträgt der Anteil des elektrisch leitfähigen Füllstoffs an dem Thermoplast-Compound vorzugsweise ungefähr 5 Gewichtsprozent bis ungefähr 30 Gewichtsprozent.

Anstelle von Ruß kann beispielsweise auch Kohlenstoff-Grieß aus Elektrographit verwendet werden, beispielsweise Kohlenstoff-Grieß mit der Bezeichnung EG 31, der von der Firma SGL Carbon AG, Wiesbaden, Deutschland, vertrieben wird.

Als Thermoplast-Material wird vorzugsweise ein Fluorthermoplast-Material verwendet.

Geeignete Fluorthermoplast-Materialien sind beispielsweise PFA (Perfluoralkoxy-Copolymer), MFA (Tetrafluorethylen-Perfluormethylvinylether), FEP (Fluorethylenpropylen), ETFE (Ethylentetrafluorethylen), ECTFE (Ethylen-Chlortrifluorethylen), HTE (Terpolymer, hergestellt aus den Monomeren Hexafluorpropylen, Tetrafluorethylen und Ethylen), THV (Tetrafluorethylen-Hexafluorpropylen-Vinyliden-Fluorid), PVDF (Polyvinylidenfluorid) und/oder PFV (Polyvinylfluorid).

Alternativ oder ergänzend hierzu kann als Fluorthermoplast-Material auch ein schmelzverarbeitbares Tetrafluorethylen-Copolymer verwendet werden; solche schmelzverarbeitbaren Tetrafluorethylen-Copolymere sind insbesondere in der WO 00/08071 A2 und in der WO 01/60911 A1 beschrieben.

Anstelle der genannten Fluorthermoplast-Materialien können auch nicht-fluorierte Thermoplaste, beispielsweise Polypropylen, eingesetzt werden.

Das Thermoplast-Material und der elektrisch leitfähige Füllstoff werden in einem Heißpressverfahren ("Hot-Compression-Moulding"-Verfahren) zu einem festen Verbund zwischen einer Polymermatrix und dem Füllstoff verschmolzen.

Insbesondere kann aus dem durch Vermischen des Thermoplast-Materials und des elektrisch leitfähigen Füllstoffs hergestellten Thermoplast-Compound durch das Heißpressverfahren ein Block gefertigt werden, aus dem dann durch Abschälen Folien aus dem Thermoplast-Compound hergestellt werden.

Der Block aus dem Thermoplast-Compound kann insbesondere in Form eines Hohlzylinders gefertigt werden.

Typische Stärken der durch Abschälen aus dem Block hergestellten Folien betragen von ungefähr 0,05 mm bis ungefähr 0,5 mm.

Alternativ hierzu kann eine Folie aus dem Thermoplast-Compound auch nach dem Schmelzextrusionsverfahren hergestellt werden.

Für die Herstellung der Mischung aus einem Thermoplast-Material und einem elektrisch leitfähigen Füllstoff werden ein Pulver des Thermoplast-Materials und ein Pulver des elektrisch leitfähigen Füllstoffs in einen handelsüblichen Taumelmischer eingebracht und durch Drehen des Mischgefäßes über einen Zeitraum von mindestens einer Stunde mit einer Drehgeschwindigkeit im Bereich von ungefähr 60 U/min bis ungefähr 120 U/min durchmischt, wobei vorzugsweise jede Minute die Drehrichtung gewechselt wird.

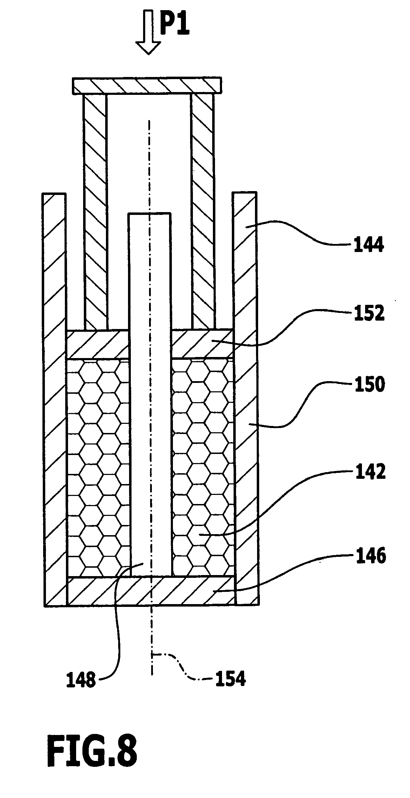

Das durch diese Durchmischung aus den Komponenten hergestellte Thermoplast-Compound 142 wird in eine in Fig. 8 schematisch dargestellte, im Wesentlichen hohlzylindrische Pressform 144 eingebracht, welche an ihrem unteren Ende durch eine Stirnwand 146 verschlossen ist, die einen längs der Längsachse der Pressform 144 verlaufenden mittigen Dorn 148 trägt.

Zwischen dem Dorn 148 und der zylindrischen Außenwand 150 der Pressform 144 ist ein Pressstempel 152 längs der Längsachse 154 der Pressform 144 verschieblich geführt.

Mittels des Pressstempels 152 wird das pulverförmige Thermoplast-Compound 142 zunächst bei einem Stempeldruck P1 von mindestens ungefähr 30 bar über einen Zeitraum von mindestens ungefähr drei Minuten vorgepresst (siehe Fig. 8).

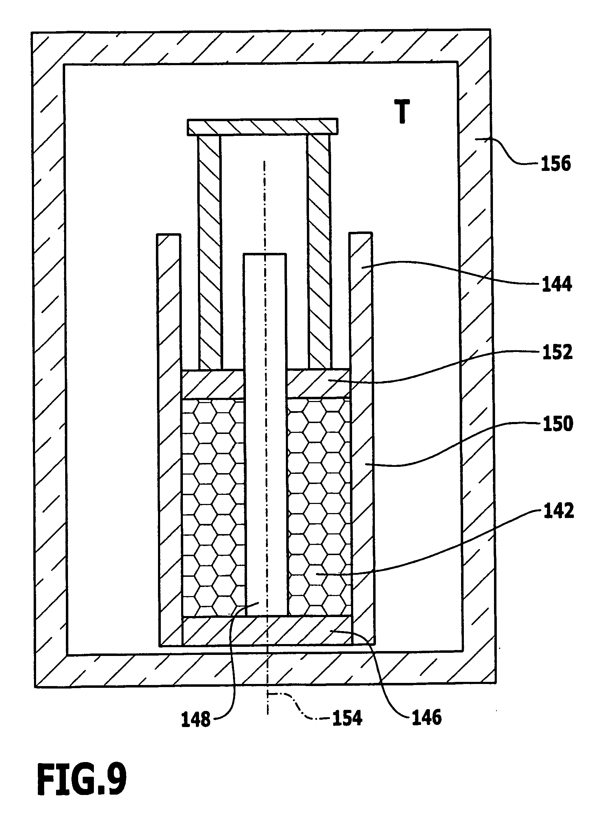

Danach wird die Pressform 144 mit der darin enthaltenen vorgepressten Mischung aus Thermoplast-Material und Füllstoff in einen in Fig. 9 schematisch dargestellten Sinterofen 156 überführt.

In dem Sinterofen 156 wird die Temperatur T während eines Zeitraums von beispielsweise ungefähr zwei Stunden auf eine Temperatur von mindestens ungefähr 250°C, vorzugsweise auf eine Temperatur oberhalb der Schmelztemperatur des im Thermoplast-Compound enthaltenen Thermoplast-Materials, erhöht und dann über einen Haltezeitraum von mindestens ungefähr weiteren 60 Stunden beibehalten.

Während der Verweildauer im Sinterofen 156 wird kein Druck auf die Polymermasse ausgeübt.

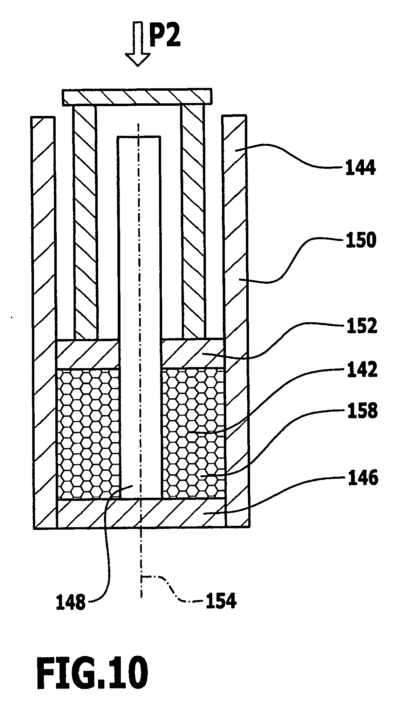

Nach dieser Wärmebehandlung wird die heiße Pressform 144 aus dem Sinterofen 156 entnommen und erneut in eine Presse überführt (siehe Fig. 10).

Unter Aufbringen eines konstanten Pressdrucks P2 von mindestens ungefähr 50 bar kühlt dann die Pressform 144 mit der Polymermasse innerhalb von beispielsweise ungefähr sechs Stunden auf eine Außentemperatur von höchstens ungefähr 80°C ab.

Nach dem vollständigen Erkalten wird das zu einem Verbund verschmolzene Thermoplast-Compound 142 aus der Pressform 144 herausgedrückt und so ein hohlzylindrischer Formkörper 158 erhalten.

Der hohlzylindrische Formkörper 158 wird auf einen profilierten Dorn aufgeschoben und in eine herkömmliche Schälmaschine, wie sie beispielsweise von der Firma KELLER HCW GmbH, Ibbenbühren-Laggenbeck, Deutschland, vertrieben wird, eingespannt.

Die für das Drehen des hohlzylindrischen Formkörpers 158 erforderliche Kraftübertragung erfolgt dabei mittels der Profilierung auf der Dornoberfläche vom sich drehenden Dorn auf den Formkörper 158.

Durch kontinuierliches Heranfahren eines Schälmessers an den sich drehenden Dorn mit dem drehfest an dem Dorn angeordneten hohlzylindrischen Formkörper 158 wird eine elektrisch leitfähige Thermoplast-Compound-Folie 140 vom Außenumfang des Formkörpers 158 abgeschält.

**Ausführungsbeispiel 1 für die Herstellung einer Folie aus ETFE mit einem Anteil von 20 Gewichtsprozent Ruß mittels Heißverpressung:**

In einen handelsüblichen Taumelmischer, der mit einem 50 Liter fassenden Mischgefäß bestückt ist, wird folgendes eingebracht:

- 20 kg Fluon ETFE Z8820X, ein fein gemahlenes Pulver eines Fluorthermoplasten (Ethylentetrafluorethylen) mit einem Schmelzpunkt im Bereich von ungefähr 260°C bis ungefähr 280°C und einer typischen Partikelgrößenverteilung, die durch folgende Werte gekennzeichnet ist:

$$x10 = 11\ \mu m;$$

$$x50 = 36\ \mu m;$$

$$x90 = 68\ \mu m;$$

wobei x10 den Partikeldurchmesser angibt, welcher von einem Anteil von 10 Gewichtsprozent der Partikel unterschritten wird; wobei x50 den Partikeldurchmesser angibt, welcher von einem Anteil von 50 Gewichtsprozent der Partikel unterschritten wird; und wobei x90 den Partikeldurchmesser angibt, der von einem Anteil von 90 Gewichtsprozent der Partikel unterschritten wird. Der Fluorthermoplast Fluon ETFE Z8820X wird beispielsweise von der Firma Asahi Glass Chemicals, Hillhouse, Großbritannien, vertrieben.

- 5 kg Printex L 6, ein amorpher Kohlenstoff-Ruß, der von der Firma EVONIK Industries AG, Essen, Deutschland, vertrieben wird.

Die Durchmischung der Komponenten ETFE und Ruß erfolgt durch Drehen des Mischgefäßes über einen Zeitraum von 90 Minuten mit einer unteren Drehgeschwindigkeit von 75 U/min und einer oberen Drehgeschwindigkeit von 90 U/min, wobei jede Minute die Drehrichtung gewechselt wird.

Das durch diese Durchmischung hergestellte Thermoplast-Compound wird in eine Pressform 144 mit den folgenden Abmessungen eingefüllt:

Innendurchmesser der zylindrischen Außenwand 150: 250 mm; Außendurchmesser des Dorns 148: 150 mm.

In diese Pressform 144 werden 30 kg der Mischung aus ETFE und

20 Gewichtsprozent Ruß eingebracht und zunächst mit einem Stempeldruck P1 von 38 bar über einen Zeitraum von 5 Minuten vorgepresst.

Danach wird die Pressform mit der darin enthaltenen vorgepressten Mischung aus ETFE und 20 Gewichtsprozent Ruß in einen Sinterofen 156 überführt. In dem Sinterofen 156 wird die Temperatur T während eines Zeitraums von zwei Stunden auf 290°C erhöht und dann über einen Zeitraum von weiteren 72 Stunden beibehalten. Während der Verweildauer im Sinterofen 156 wird kein Druck auf die Polymermasse ausgeübt.

Danach wird die heiße Pressform 144 aus dem Sinterofen 156 entnommen und erneut in eine Presse überführt. Unter Aufbringen eines konstanten Druckes P2 von 65 bar kühlt dann die Pressform 144 mit der Polymermasse innerhalb von 6 Stunden auf eine Außentemperatur von 60°C bis 70°C ab.

Nach dem vollständigen Erkalten wird die Polymermasse aus der Pressform 144 ausgedrückt und so ein hohlzylindrischer Formkörper 158 erhalten.

Der hohlzylindrische Formkörper 158 aus ETFE und 20 Gewichtsprozent Ruß wird auf einen profilierten Dorn aufgeschoben und in eine Schälmaschine der Firma KELLER eingespannt. Durch Drehen des profilierten Dorns und des drehfest damit verbundenen hohlzylindrischen Formkörpers 158 sowie kontinuierliches Heranfahren eines Schälmessers an den hohlzylindrischen Formkörper 158 wird eine Thermoplast-Compound-Folie 140 vom Außenumfang des hohlzylindrischen Formkörpers 158 abgeschält.

Dabei beträgt die Schälgeschwindigkeit für die Folienherstellung ungefähr 11 m/min.

Die Foliendicke für die Herstellung der Folie 140 aus ETFE und 20 Gewichtsprozent Ruß beträgt ungefähr 100 μm.

(Ende des Ausführungsbeispiels 1)

Zur Herstellung einer Bipolarplatte 122 unter Verwendung der in der vorstehend erläuterten Weise hergestellten elektrisch leitfähigen Thermoplast-Compound-Folie 140 wird wie folgt vorgegangen:

In eine beheizbare Laminatpresse 166 wird der folgende Schichtaufbau eingebracht (siehe Fig. 11):

- eine metallhaltige Folie 136;

- eine elektrisch leitfähige Thermoplast-Compound-Folie 140;

- ein Kohlenstofffaser-Vlies 138;

- eine elektrisch leitfähige Thermoplast-Compound-Folie 140;

- eine metallhaltige Folie 136.

Zum Schutz der metallhaltigen Folien 136 an den Außenseiten der herzustellenden Bipolarplatte 122 vor einer Beschädigung während des Laminierprozesses wird ferner jeweils eine Schutzfolie 160 zwischen den vorstehend beschriebenen Schichtaufbau und eine obere Pressplatte 162 und eine untere Pressplatte 164 der beheizbaren Laminatpresse 166 eingebracht.

Diese Schutzfolie 160 kann beispielsweise aus einem Fluorpolymermaterial, insbesondere aus Polytetrafluorethylen (PTFE), bestehen.

Die beheizbare Laminatpresse 166 wird auf einen Enddruck von beispielsweise höchstens ungefähr 10 mbar evakuiert.

Anschließend wird ein Startdruck P mittels der Pressplatten 162 und 164 auf die miteinander zu laminierenden Schichten der Bipolarplatte 122 aufgebracht.

Dann wird die Temperatur der zu laminierenden Schichten (mittels eines heißen Öls, welches die Pressplatten 162 und 164 durchströmt) von Raumtemperatur auf eine Temperatur von beispielsweise mindestens 250°C erhöht.

Bei dieser erhöhten Temperatur wird der Startdruck über eine Zeit von beispielsweise mindestens 5 Minuten gehaltne.

Anschließend wird der Anpressdruck vom Startdruck auf einen Enddruck P' von beispielsweise mindestens 200 N/cm$^2$ erhöht.

Der erhöhte Druck wird bei der erhöhten Temperatur während einer Druckhaltezeit von beispielsweise mindestens 5 Minuten gehalten.

Anschließend wird die Temperatur auf beispielsweise höchstens 100°C während einer Abkühlzeit von beispielsweise ungefähr 1,5 Stunden unter Beibehaltung des erhöhten Anpressdruckes von beispielsweise mindestes 200 N/cm$^2$ abgesenkt.

Nach Erreichen der gewünschten Abkühltemperatur von beispielsweise 100°C wird der Anpressdruck auf null abgesenkt, die Laminatpresse 166 belüftet und das aus dem Kohlenstofffaser-Vlies 138, den elektrisch leitfähigen Thermoplast-Compound-Folien 140 und den metallhaltigen Folien 136 gebildete Laminat entnommen, welches die Bipolarplatte 122 bildet.

Die Schutzfolien 160 verbinden sich hingegen nicht mit den metallhaltigen Folien 136 und bleiben daher in der Laminatpresse 166 zurück.

Durch das Evakuieren der Laminatpresse 166 vor dem Beaufschlagen des Schichtenstapels mit dem Startdruck werden Lufteinschlüsse in dem Schichtenstapel vermieden, so dass eine haltbare Laminierung im Wesentlichen vollständig ebener Schichten erzielt wird.

**Ausführungsbeispiel 2 für die Herstellung einer laminierten Bipolarplatte aus einem Kohlenstofffaser-Vlies, zwei Folien aus ETFE mit 20 Gewichtsprozent Ruß und zwei Blei/Zinn-Folien durch Laminieren:**

In eine beheizbare Laminatpresse vom Typ LAM V 280 wird der folgende Schichtaufbau eingebracht:

- eine Pb-Sn-Folie 136 mit einer Stärke von 76 $\mu$m;

- eine Folie aus ETFE und 20 Gewichtsprozent Ruß mit einer Stärke von 100 $\mu$m;

- ein Kohlenstofffaser-Vlies vom Typ SIGRATEX SPC 7011/100 des Herstellers SGL Carbon AG, Wiesbaden, Deutschland, mit einer spezifischen Flächendichte von 30 g/m$^2$;

- eine Folie aus ETFE und 20 Gewichtsprozent Ruß mit einer Stärke von 100 $\mu$m;

- eine Pb-Sn-Folie 136 mit einer Stärke von 76 $\mu$m.

Die vorstehend genannten Folien weisen eine Länge von beispielsweise ungefähr 1.200 mm und eine Breite von beispielsweise ungefähr 330 mm auf.

Zum Schutz der Oberfläche der Pb-Sn-Folien vor Beschädigung während des Laminierprozesses wird zwischen diese Folien und die Pressplatten 162, 164 der Laminatpresse 166 beidseitig jeweils eine Folie aus PTFE mit einer Stärke von 100 $\mu$m eingelegt.

Anschließend wird ein Laminierprozess mit den folgenden Einzelschritten durchgeführt:

- Evakuierung der beheizbaren Laminatpresse 166 während einer Minute auf einen Enddruck von 5 mbar;

- Aufbringen eines Startdruckes von 50 N/cm$^2$;

- Erhöhung der Temperatur der zu laminierenden Schichten von Raumtemperatur auf 300°C während eines Erwärmungszeitraumes von zwei Stunden;

- Halten des Startdruckes von 50 N/cm$^2$ bei einer Temperatur von 300°C während einer Druckhaltezeit von 10 Minuten;

- Erhöhung des Anpressdruckes von dem Startdruck von 50 N/cm$^2$ auf einen Enddruck von 250 N/cm$^2$;

- Halten des erhöhten Anpressdruckes von 250 N/cm$^2$ bei einer Temperatur von 300°C während einer Druckhaltezeit von 10 Minuten;

- Absenkung der Temperatur der zu laminierenden Schichten von 300°C auf 90°C während einer Abkühlzeit von 1,5 Stunden unter Beibehaltung eines Anpressdruckes von 250 N/cm$^2$;

- Absenken des Anpressdrucks auf null nach dem Erreichen einer Temperatur von 90°C;

- Belüften der beheizbaren Laminatpresse 166;

- Entnehmen der Bipolarplatte 122 als Laminat aus dem Kohlenstofffaser-Vlies 138, den elektrisch leitfähigen ETFE-Folien mit 20 Gewichtsprozent Ruß 140 und den metallhaltigen Pb-Sn-Folien 136.

(Ende des Ausführungsbeispiels 2)

Durch die Verstärkung der elektrisch leitfähigen Thermoplast-Compound-Folien 140 mit dem Kohlenstofffaser-Vlies 138 ergibt sich eine weitere Erhöhung der Leitfähigkeit der Bipolarplatte 122.

Das vorstehend beschriebene Verfahren der Trockenmischung von Thermoplast-Material und elektrisch leitfähigem Füllstoff, insbesondere Ruß, unter nachgeschalteter Herstellung der Thermoplast-Compound-Folie 140 mittels eines Schälverfahrens erlaubt jedoch die Herstellung dermaßen hochgefüllter Thermoplast-Compound-Folien 140, dass auf die Verwendung eines Kohlenstofffaser-Vlieses 138 zur Verbesserung der elektrischen Leitfähigkeit des Substrates 134 der Bipolarplatte 122 verzichtet werden kann.

In diesem Fall werden die beiden elektrisch leitfähigen Thermoplast-Compound-Folien 140 und das Kohlenstofffaser-Vlies 138 der in Fig. 1 schematisch dargestellten Ausführungsform eines Substrates 134 durch eine einzige elektrisch leitfähige Thermoplast-Compound-Folie 140 ersetzt.

Abgesehen von dieser Ersetzung wird das Laminierverfahren zur Herstellung der Bipolarplatte 122 ohne das Kohlenstofffaser-Vlies 138 genauso durchgeführt, wie dies vorstehend im Zusammenhang mit einem Kohlenstofffaser-Vlies-haltigen Substrat 134 beschrieben worden ist.

Insbesondere kann ein mehrteiliges Substrat 134 aus zwei ETFE-Folien mit 20 Gewichtsprozent Ruß mit einer Stärke von jeweils 100 $\mu$m und einem Kohlenstofffaser-Vlies mit einer spezifischen Flächendichte von 30 g/m$^2$ durch eine einzige ETFE-Folie mit 20 Gewichtsprozent Ruß mit einer Stärke von 100 $\mu$m bis 200 $\mu$m, vorzugsweise mit einer Stärke von 100 $\mu$m bis 150 $\mu$m, ersetzt werden.

Wie vorstehend ausgeführt, erfolgt das Aufbringen der Pb-Schicht auf beiden Seiten der Bipolarplatte 122 unter Verwendung einer Pb-Folie nach dem Laminierverfahren.

Dabei enthält die Legierung der Pb-Folie zur Stabilisierung gegen Oxidation einen geringen Anteil an Zinn (Sn), beispielsweise einen Anteil von bis zu maximal ungefähr 5 Gewichtsprozent Sn.

Zur Herstellung einer integrierten Bipolarzelle 106 aus einer in der vorstehend beschriebenen Weise hergestellten Bipolarplatte 122 und einem negativen Gitter 116 sowie einem positiven Gitter 120 wird wie folgt vorgegangen:

Zunächst werden ein negatives Gitter 116 und ein positives Gitter 120 jeweils durch zerspanende Bearbeitung einer Thermoplast-Compound-Folie hergestellt.

Diese Thermoplast-Compound-Folie, welche keine elektrische Leitfähigkeit aufweisen muss, kann in derselben Weise hergestellt werden, wie dies vorstehend für die elektrisch leitfähigen Thermoplast-Compound-Folien 140 der Bipolarplatte 122 beschrieben worden ist, jedoch vorzugsweise unter Ersetzung des elektrisch leitfähigen Füllstoffs durch einen nicht elektrisch leitfähigen Füllstoff.

Als Füllstoff für die Thermoplast-Compound-Folien, aus denen die Gitter 116 und 120 hergestellt werden, können insbesondere Glasfasern, vorzugsweise Kurzglasfasern vom Typ E-Glas, verwendet werden.

Alternativ hierzu können das negative Gitter 116 und das positive Gitter 120 auch durch zerspanende Bearbeitung einer Folie aus ungefülltem Thermoplast-Material hergestellt werden.

Die Gitter 116 und 120 können aus dem gleichen Thermoplast-Material wie die Thermoplast-Compound-Folien 140 der Bipolarplatte 122 hergestellt werden; wahlweise können jedoch auch andere geeignete Werkstoffe für die Gitter 116 und 120 eingesetzt werden.

Die Gitter 116 und 120 können insbesondere aus einem thermoplastischen Werkstoff, vorzugsweise aus Polypropylen (PP) und/oder aus Polycarbonat (PC), hergestellt werden.

**Ausführuncisbeispiel 3 für die Herstellung einer nicht elektrisch leitfähigen Thermoplast-Compound-Folie für ein negatives Gitter oder ein positives Gitter mittels Heißverpressung:**

In einen handelsüblichen Taumelmischer, der mit einem 50 Liter fassenden Mischgefäß bestückt ist, wird Folgendes eingebracht:

- 20 kg Fluon ETFE Z8820X des Herstellers Asahi Glass Chemicals, Hillhouse, Großbritannien, ein fein gemahlenes Pulver eines Fluorthermoplasten (Ethylentetrafluorethylen) mit einem Schmelzpunkt im Bereich von 250°C bis 280°C und einer typischen Partikelgrößenverteilung, die durch folgende Werte gekennzeichnet ist:

$$x10 = 11\,\mu m;$$

$$x50 = 36\,\mu m;$$

$$x90 = 68\,\mu m;$$

wobei x10 den Partikeldurchmesser bezeichnet, welcher von 10 Gewichtsprozent der Partikel unterschritten wird; wobei x50 den Partikeldurchmesser bezeichnet, der von 50 Gewichtsprozent der Partikel unterschritten wird; und wobei x90 den Partikeldurchmesser bezeichnet, welcher von 90 Gewichtsprozent der Partikel unterschritten wird.

- 5 kg Kurzglasfasern des Typs MF 7904, die von der Firma Lanxess Deutschland GmbH, Leverkusen, Deutschland, vertrieben werden; hierbei handelt es sich um Glasfasern vom Typ E-Glas mit einem nominellen Faserdurchmesser von 14 $\mu m$ und einer mittleren Faserlänge von ungefähr 60 $\mu m$, wobei das Schüttgewicht der Kurzglasfasern ungefähr 0,9 g/ml beträgt.

Die Durchmischung der Komponenten ETFE und 20 Gewichtsprozent Kurzglasfasern erfolgt durch Drehen des Mischgefäßes über einen Zeitraum von 90 Minuten mit einer unteren Drehgeschwindigkeit von 75 U/min und einer oberen Drehgeschwindigkeit von 90 U/min, wobei jede Minute die Drehrichtung gewechselt wird.

Das so durch Trockenmischung erzeugte Thermoplast-Compound wird in eine Pressform 144 mit den folgenden Abmessungen eingebracht:

Innendurchmesser der hohlzylindrischen Außenwand 150: 250 mm Außendurchmesser des Dornes 148: 150 mm.

In diese Pressform 144 werden 15 kg der Mischung aus ETFE und 20 Gewichtsprozent Kurzglasfasern eingebracht und zunächst mit einem Stempeldruck von 140 bar über einen Zeitraum von 5 Minuten vorgepresst.

Danach wird die Pressform 144 mit der darin enthaltenen vorgepressten Mischung aus ETFE und 20 Gewichtsprozent Kurzglasfasern in einen Sinterofen 156 überführt.

Im Sinterofen 156 wird die Temperatur während eines Zeitraums von 2,3 Stunden auf 310°C erhöht und dann über einen Zeitraum von weiteren 24 Stunden gehalten.

Während der Verweildauer im Sinterofen 156 wird kein Druck auf die Polymermasse ausgeübt.

Danach wird die heiße Pressform 144 aus dem Sinterofen 156 entnommen und erneut in eine Presse überführt.

Unter Aufbringen eines Druckes von zunächst 50 bar während einer Haltezeit von einer Minute und anschließendem Erhöhen des Druckes auf 400 bar kühlt dann die Pressform 144 mit der Polymermasse innerhalb von 6 Stunden auf eine Außentemperatur von 60°C bis 70°C ab.

Nach dem vollständigen Erkalten wird die Polymermasse aus der Pressform 144 ausgedrückt und so ein hohlzylindrischer Formkörper 158 erhalten.

Der hohlzylindrische Formkörper 158 aus ETFE und 20 Gewichtsprozent Kurzglasfasern wird auf einen profilierten Dorn aufgeschoben und in eine Schälmaschine des Herstellers KELLER eingespannt.

Durch kontinuierliches Heranfahren eines Schälmessers an den sich mit dem Dorn drehenden hohlzylindrischen Formkörper 158 wird eine Folie aus ETFE und 20 Gewichtsprozent Kurzglasfasern vom Außenumfang des hohlzylindrischen Formkörpers 158 abgeschält.

Die Schälgeschwindigkeit für die Folienherstellung beträgt 11 m/min.

Die elektrisch nicht leitfähige Thermoplast-Compound-Folie aus ETFE mit 20 Gewichtsprozent Kurzglasfasern wird mit einer Stärke von 1,4 mm für das negative Gitter 116 (Anode) und mit einer Stärke von 1,2 mm für das positive Gitter 120 (Kathode) hergestellt.

(Ende des Ausführungsbeispiels 3)

Aus in der vorstehend beschriebenen Weise durch ein Heißpressverfahren und ein Schälverfahren hergestellten Thermoplast-Compound-Folien werden negative Gitter 116 und positive Gitter 120 durch spanende Bearbeitung mit den Konturen gemäß den Fig. 4 und 5 hergestellt.

Dabei beträgt die Länge eines Gitters 116 oder 120 beispielsweise ungefähr 360 mm und die Breite eines Gitters 116 oder 120 beispielsweise ungefähr 325 mm.

Die im Wesentlichen quadratischen Durchtrittsöffnungen 124 der Gitter 116, 120 weisen beispielsweise eine Länge a von ungefähr 28 mm und eine Breite b von ebenfalls ungefähr 28 mm auf.

Die Breite s der Stege 168 zwischen den Durchtrittsöffnungen 124 beträgt beispielsweise ungefähr 3 mm.

Zur Herstellung einer integrierten Bipolarzelle 106 aus einem negativen Gitter 116, einer Bipolarplatte 122 und einem positiven Gitter 120 wird wie folgt vorgegangen:

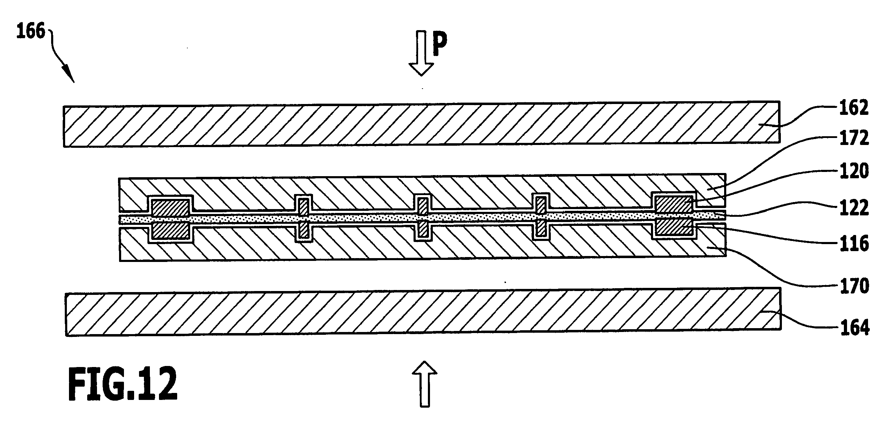

In eine beheizbare Laminatpresse 166 werden die folgenden Werkzeuge und Komponenten einer Bipolarzelle 106 (in der Reihenfolge von unten nach oben) eingebracht (siehe Fig. 12):

- eine Negativform 170, die komplementär zu dem negativen Gitter 116 ausgebildet und beispielsweise durch zerspanende Bearbeitung eines Aluminium-Grundkörpers hergestellt ist;

- ein negatives Gitter (Anodengitter) 116, das beispielsweise durch zerspanende Bearbeitung einer elektrisch nicht leitfähigen Thermoplast-Compound-Folie hergestellt ist;

- eine laminierte Bipolarplatte 122, wie vorstehend im Zusammenhang mit Fig. 11 beschrieben;

- ein positives Gitter (Kathodengitter) 120, hergestellt beispielsweise durch zerspanende Bearbeitung einer elektrisch nicht leitfähigen Thermoplast-Compound-Folie;

- eine Negativform 172, die komplementär zu dem positiven Gitter 120 ausgebildet und beispielsweise durch zerspanende Bearbeitung eines Aluminium-Grundkörpers hergestellt ist.

Um später eine bessere Haftung der negativen Paste auf der Seite des negativen Gitters 116 und der positiven Paste auf der Seite des positiven Gitters 120 zu erreichen, können die außenliegenden Seiten der metallhaltigen Folien 136 der Bipolarplatte 122 vor oder nach dem Laminieren mit den Gittern 116 und 120 einer Oberflächenbehandlung unterzogen werden.

Beispielsweise kann vorgesehen sein, die Außenseiten der metallhaltigen Folien 136 durch "Sandstrahlen" unter Verwendung von Glasperlen, Aluminiumoxid oder Trockeneis ($CO_2$) zu reinigen und aufzurauen.

Nach dem Einbringen des vorstehend beschriebenen Schichtaufbaus in die beheizbare Laminatpresse 166 wird ein Laminierprozess mit den folgenden Einzelschritten unter Umgebungsdruck, d.h. ohne Evakuierung der Laminatpresse 166, ausgeführt:

- Aufbringen eines Startdruckes P von beispielsweise mindestens ungefähr 20 $N/cm^2$;

- Erhöhung der Temperatur von Raumtemperatur auf eine Temperatur von beispielsweise mindestens ungefähr 250°C während einer Erwärmungszeit von beispielsweise mindestens ungefähr 1,5 Stunden;

- Halten des Druckes von beispielsweise mindestens ungefähr 20 $N/cm^2$ bei der erhöhten Temperatur von beispielsweise mindestens ungefähr 200°C während einer Druckhaltezeit von beispielsweise mindestens ungefähr 15 Minuten;

- Absenkung der Temperatur der zu laminierenden Schichten von der erhöhten Temperatur von beispielsweise mindestens ungefähr 200°C auf eine Temperatur von beispielsweise höchstens ungefähr 50°C während einer Abkühlzeit von beispielsweise ungefähr 1,3 Stunden, unter Beibehaltung des Anpressdruckes von beispielsweise mindestens ungefähr 20 $N/cm^2$;

- Absenkung des Anpressdruckes auf null nach Erreichen der gewünschten Abkühltemperatur von beispielsweise 50°C;

- Entnehmen der Bipolarzelle 106 in Form eines Laminats aus der Bipolarplatte 122 und den Gittern 116 und 120.

**Ausführungsbeispiel 4 für die Herstellung einer Bipolarzelle aus einer Bipolarplatte, einem negativen Gitter und einem positiven Gitter durch ein Laminierverfahren:**

In eine beheizbare Laminatpresse 166 vom Typ LAM V 280 werden die folgenden Werkzeuge und Komponenten einer zu laminierenden Bipolarzelle (in der Reihenfolge von unten nach oben) eingebracht:

- eine Negativform 170, die komplementär zu dem negativen Gitter 116 ausgebildet und durch zerspanende Bearbeitung eines Aluminium-Grundkörpers hergestellt ist;

- ein negatives Gitter 116 aus ETFE und 20 Gewichtsprozent Kurzglasfasern, das durch zerspanende Bearbeitung einer Folie aus ETFE und 20 Gewichtsprozent Kurzglasfasern mit der Dicke 1,4 mm hergestellt ist;

- eine laminierte Bipolarplatte 122, wie im vorstehenden Ausführungsbeispiel 2 beschrieben;

- ein positives Gitter 120 aus ETFE und 20 Gewichtsprozent Kurzglasfasern, das durch zerspanende Bearbeitung einer Folie aus ETFE und 20 Gewichtsprozent Kurzglasfasern mit der Dicke 1,2 mm hergestellt ist;

- eine Negativform 172 für das positive Gitter 120, die komplementär zu dem positiven Gitter 120 ausgebildet und durch zerspanende Bearbeitung eines Aluminium-Grundkörpers hergestellt ist.

Nach Einbringen des vorstehend beschriebenen Schichtaufbaus zwischen die Pressplatten 162 und 164 der Laminatpresse 166 werden die folgenden Einzelschritte unter Umgebungsdruck ausgeführt:

- Aufbringen eines Startdruckes von 35 N/cm$^2$;

- Erhöhung der Temperatur von Raumtemperatur auf 250°C während einer Erwärmungszeit von ungefähr 1,8 Stunden;

- Halten des Druckes von 35 N/cm$^2$ bei einer Temperatur von 250°C während einer Druckhaltezeit von ungefähr 20 Minuten;

- Absenkung der Temperatur von 250°C auf 40°C während einer Abkühlzeit von ungefähr 1,3 Stunden unter Beibehaltung des Anpressdruckes von 35 N/cm$^2$;

- Absenkung des Anpressdrucks auf null nach Erreichen der gewünschten Abkühltemperatur von 40°C;

- Entnehmen der als Laminat der Bipolarplatte 122, des negativen Gitters 116 und des positiven Gitters 120 hergestellten Bipolarzelle 106.

(Ende des Ausführungsbeispiels 4)

Alternativ zu dem vorstehend beschriebenen Laminierverfahren können das negative Gitter 116 und das positive Gitter 120 auch durch ein Spritzgießverfahren oder durch Transfer-Moulding direkt aus der Schmelze auf die Bipolarplatte 122 aufgebracht werden.

Die Abstandshalter 108 der Bipolar-Bleisäurebatterie 100 können aus einer Folie aus einem thermoplastischen Fluorpolymermaterial oder aus Polytetrafluorethylen (PTFE) durch zerspanende Bearbeitung mit der in den Fig. 6 und 7 dargestellten Außenkontur hergestellt werden.

Die negative Platte 114 der negativen Endzelle 102 der Bipolar-Bleisäurebatterie 100 umfasst dasselbe Substrat 134 wie die Bipolarplatte 122, das jedoch nur einseitig, nämlich auf der dem negativen Gitter 116 zugewandten Seite der negativen Platte 114, mit einer metallhaltigen Folie, beispielsweise einer Blei/Zinn-Folie, versehen ist.

Die negative Platte 114 kann aus dem Substrat und aus der metallhaltigen Folie durch ein dem Laminierverfahren der Bipolarplatte 122 entsprechendes Laminierverfahren hergestellt werden.

Die positive Platte 118 der positiven Endzelle 104 der Bipolar-Bleisäurebatterie 100 umfasst dasselbe Substrat 134 wie die Bipolarplatte 122, ist aber nur einseitig, nämlich auf ihrer dem positiven Gitter 120 zugewandten Seite, mit einer metallhaltigen Folie, beispielsweise einer Blei/Zinn-Folie, versehen.

Die positive Platte 118 kann durch ein dem Laminierverfahren zur Herstellung der Bipolarplatte 122 entsprechendes Laminierverfahren aus dem Substrat und der metallhaltigen Folie hergestellt werden.

Ferner kann die negative Platte 114 der negativen Endzelle 102 durch ein dem Laminierverfahren zur Herstellung der integrierten Bipolarzelle 106 entsprechendes Laminierverfahren mit dem negativen Gitter 116 verbunden werden.

Ebenso kann die positive Platte 118 der positiven Endzelle 104 durch ein dem Laminierverfahren zur Herstellung der integrierten Bipolarzelle 106 entsprechendes Laminierverfahren mit dem positiven Gitter 120 verbunden werden.

Vor dem Zusammenbau der Bipolar-Bleisäurebatterie 100 werden die positiven Gitter 120 der Bipolarzellen 106 und der positiven Endzelle 104 mit positiver Paste befüllt.

Ebenso werden die negativen Gitter 116 der Bipolarzellen 106 und der negativen Endzelle 102 mit negativer Paste befüllt.

In die Abstandshalter 108 werden Separatoren in Form von Glasfasermatten eingelegt.

Dabei kann vorgesehen sein, dass die Glasfasermatten im druckfreien Zustand eine Dicke aufweisen, welche die Dicke der Abstandshalter 108 übersteigt, und dass die Glasfasermatten beim Zusammenbau der Bipolar-Bleisäurebatterie 100 in deren Längsrichtung komprimiert werden.

Nachdem die gewünschte Anzahl von Bipolarzellen 106 und von Abstandshaltern 108 mit Glasfasermatten sowie die negative Endzelle 102 und die positive Endzelle 104 in der in den Fig. 1 bis 3 dargestellten Reihenfolge zusammengestellt worden sind, werden dieselben unter Anwendung eines Drucks in der Längsrichtung 174 der Bipolar-Bleisäurebatterie 100 gegeneinander gepresst und durch geeignete Verspannungseinrichtungen in dieser Position gegeneinander verspannt.

Anschließend kann der Elektrolyt durch (nicht dargestellte) Befüllungsöffnungen in den Abstandshaltern 108 in die als Separatoren dienenden Glasfasermatten eingefüllt werden.

Damit ist die Bipolar-Bleisäurebatterie 100 betriebsbereit und kann aufgeladen werden.

Wenn die Abstandshalter 108 und die negativen Gitter 116 sowie die positiven Gitter 120 aus einem Thermoplastmaterial enthaltenden Material gebildet sind, so können in der Längsrichtung 174 der Bipolar-Bleisäurebatterie 100 aufeinanderfolgende Abstandshalter 108 und Gitter 116, 120 durch Verschweißung zu einem Zellenstapel zusammengefügt werden.

In diesem Fall können die Dichtelemente 128 zwischen den Abstandshaltern 108 und den denselben benachbarten Gittern 116 bzw. 120 entfallen.

Das vorstehend beschriebene Verfahren zur Herstellung einer Bipolar-Bleisäurebatterie 100 ist besonders umweltfreundlich und sorgt für eine besonders hohe chemische Beständigkeit der Bleischichten in den metallhaltigen Folien 136, insbesondere auf der den negativen Gittern (Anodengittern) 116 zugewandten Seite der Bleischichten.

Der bipolare Aufbau der Bipolar-Bleisäurebatterie 100 verringert den Bedarf an Blei bei gleicher Leistung und führt somit zu einem besonders umweltfreundlichen Endprodukt.

**Patentansprüche**

1.  Verfahren zur Herstellung einer Bipolarplatte (122) für eine bipolare Bleisäurebatterie (100), umfassend folgende Verfahrensschritte:

    - Bereitstellen eines Substrats (134) für die Bipolarplatte (122);

    - Bereitstellen mindestens einer Folie (136) aus metallhaltigem Material;
    - Laminieren der mindestens einen Folie (136) aus metallhaltigem Material und des Substrats (134);
    **dadurch gekennzeichnet,**
    **dass** das Substrat (134) mindestens eine Folie (140) aus einem Thermoplast-Compound, das mindestens ein Thermoplast-Material und mindestens einen elektrisch leitenden Füllstoff enthält, umfasst,
    wobei der elektrisch leitende Füllstoff ein Leitpigment, Ruß, Kohlenstoff-Grieß und/oder Graphit enthält.

2.  Verfahren nach Anspruch 1, **dadurch gekennzeichnet, dass** zwei Folien (136) aus metallhaltigem Material bereitgestellt und mit einander gegenüberliegenden Seiten des Substrats (134) laminiert werden.

3.  Verfahren nach einem der Ansprüche 1 oder 2, **dadurch gekennzeichnet, dass** die Folie (140) aus dem Thermoplast-Compound beidseitig mit jeweils einer Folie (136) aus metallhaltigem Material laminiert wird.

4.  Verfahren nach einem der Ansprüche 1 bis 3, **dadurch gekennzeichnet, dass** das Substrat (134) mindestens ein elektrisch leitfähiges Vlies (138) umfasst.

5.  Verfahren nach Anspruch 4, **dadurch gekennzeichnet, dass** das Substrat (134) zwei Folien (140) aus einem Thermoplast-Compound und ein dazwischen angeordnetes Vlies (138) umfasst.

6.  Verfahren nach einem der Ansprüche 1 bis 5, **dadurch gekennzeichnet, dass** mindestens eine Folie (136) aus bleihaltigem Material verwendet wird.

7.  Verfahren nach Anspruch 6, **dadurch gekennzeichnet, dass** die Folie (136) aus bleihaltigem Material einen Zusatz von Zinn enthält.

8.  Verfahren nach einem der Ansprüche 1 bis 7, **dadurch gekennzeichnet, dass** das Laminieren in einer beheizten Laminatpresse (166) erfolgt.

9.  Verfahren nach einem der Ansprüche 1 bis 8, **dadurch gekennzeichnet, dass** das Laminieren unter Vakuum erfolgt.

10. Verfahren nach einem der Ansprüche 1 bis 9, **dadurch gekennzeichnet, dass** das Laminieren unter einem Anpressdruck durchgeführt wird, welcher während des Laminiervorgangs variiert.

**11.** Verfahren nach Anspruch 10, **dadurch gekennzeichnet, dass** der Anpressdruck während einer Aufheizphase des Laminiervorgangs geringer ist als der Anpressdruck während einer Temperaturhaltephase des Laminiervorgangs.

**12.** Verfahren nach einem der Ansprüche 10 oder 11, **dadurch gekennzeichnet, dass** der Anpressdruck während einer Aufheizphase des Laminiervorgangs geringer ist als während einer Abkühlphase des Laminiervorgangs.

**13.** Verfahren nach einem der Ansprüche 1 bis 12, **dadurch gekennzeichnet, dass** mindestens eine Folie (136) aus metallhaltigem Material während des Laminiervorgangs durch eine Schutzfolie (160) abgedeckt wird.

**14.** Bipolarplatte für eine bipolare Bleisäurebatterie (100), umfassend ein Substrat (134) und mindestens eine Folie (136) aus metallhaltigem Material, die mit dem Substrat (134) laminiert ist,
**dadurch gekennzeichnet,**
**dass** das Substrat (134) mindestens eine Folie (140) aus einem Thermoplast-Compound, das mindestens ein Thermoplast-Material und mindestens einen elektrisch leitenden Füllstoff enthält, umfasst, wobei der elektrisch leitende Füllstoff ein Leitpigment, Ruß, Kohlenstoff-Grieß und/oder Graphit enthält.

**Claims**

**1.** Method for producing a bipolar plate (122) for a bipolar lead-acid battery (100), comprising the following method steps:

- providing a substrate (134) for the bipolar plate (122);
- providing at least one foil (136) made of metal-containing material;
- laminating the at least one foil (136) made of metal-containing material
and the substrate (134);
**characterised in that** the substrate (134) comprises at least one foil (140) made of a thermoplastic compound, which contains at least one thermoplastic material and at least one electrically conductive filler, the electrically conductive filler containing a conductive pigment, carbon black, granulated carbon and/or graphite.

**2.** Method according to claim 1, **characterised in that** two foils (136) made of metal-containing material are provided and laminated with mutually opposite sides of the substrate (134).

**3.** Method according to either of claims 1 or 2, **characterised in that** the foil (140) made of the thermoplastic compound is laminated on both sides with a respective foil (136) made of metal-containing material.

**4.** Method according to any one of claims 1 to 3, **characterised in that** the substrate (134) comprises at least one electrically conductive nonwoven material (138).

**5.** Method according to claim 4, **characterised in that** the substrate (134) comprises two foils (140) made of a thermoplastic compound and a nonwoven material (138) arranged in between.

**6.** Method according to any one of claims 1 to 5, **characterised in that** at least one foil (136) made of lead-containing material is used.

**7.** Method according to claim 6, **characterised in that** the foil (136) made of lead-containing material contains an addition of tin.

**8.** Method according to any one of claims 1 to 7, **characterised in that** the lamination takes place in a heated laminate press (166).

**9.** Method according to any one of claims 1 to 8, **characterised in that** the lamination takes place under a vacuum.

**10.** Method according to any one of claims 1 to 9, **characterised in that** the lamination is carried out under a clamping pressure, which varies during the lamination process.

**11.** Method according to claim 10, **characterised in that** the clamping pressure during a heating phase of the lamination process is lower than the clamping pressure during a temperature maintaining phase of the lamination process.

**12.** Method according to either of claims 10 or 11, **characterised in that** the clamping pressure during a heating phase of the lamination process is lower than during a cooling phase of the lamination process.

**13.** Method according to any one of claims 1 to 12, **characterised in that** at least one foil (136) made of metal-containing material is covered by a protective foil (160) during the lamination process.

**14.** Bipolar plate for a bipolar lead-acid battery (100), comprising a substrate (134) and at least one foil (136) made of metal-containing material, which is laminated with the substrate (134), **characterised in that** the substrate (134) comprises at least one foil (140) made of a thermoplastic compound, which contains at least one thermoplastic material and at least one electrically conductive filler, the electrically conductive filler containing a conductive pigment, carbon black, granulated carbon and/or graphite.

**Revendications**

1. Procédé de fabrication d'une plaque bipolaire (122) pour une batterie au plomb bipolaire (100), comprenant les étapes suivantes :

   - préparation d'un substrat (134) pour la plaque bipolaire (122) ;
   - préparation d'au moins une feuille (136) en matériau contenant du métal ;
   - laminage de ladite au moins une feuille (136) en matériau contenant
   du métal et du substrat (134) ;
   **caractérisé en ce que** le substrat (134) comprend au moins une feuille (140) en un composite thermoplastique, qui contient au moins un matériau thermoplastique et au moins une matière de charge électriquement conductrice, dans lequel la matière de charge électriquement conductrice contient un pigment conducteur, de la suie, du menu carbone et/ou du graphite.

2. Procédé selon la revendication 1, **caractérisé en ce qu'**on prépare deux feuilles (136) en matériau contenant du métal et on les lamine avec des côtés opposés l'un à l'autre du substrat (134).

3. Procédé selon l'une des revendications 1 ou 2, **caractérisé en ce qu'**on lamine la feuille (140) en composé thermoplastique sur les deux faces respectivement avec une feuille (136) en matériau contenant du métal.

4. Procédé selon l'une quelconque des revendications 1 à 3, **caractérisé en ce que** le substrat (134) comprend au moins un non-tissé électriquement conducteur (138).

5. Procédé selon la revendication 4, **caractérisé en ce que** le substrat (134) comprend deux feuilles (140) en un composé thermoplastique et un non-tissé (138) disposé entre celles-ci.

6. Procédé selon l'une quelconque des revendications 1 à 5, **caractérisé en ce que** l'on utilise au moins une feuille (136) en matériau contenant du plomb.

7. Procédé selon la revendication 6, **caractérisé en ce que** la feuille (136) en matériau contenant du plomb contient une addition d'étain.

8. Procédé selon l'une quelconque des revendications 1 à 7, **caractérisé en ce que** l'on effectue le laminage dans une presse de laminage chauffée (166).

9. Procédé selon l'une quelconque des revendications 1 à 8, **caractérisé en ce que** l'on effectue le laminage sous vide.

10. Procédé selon l'une quelconque des revendications 1 à 9, **caractérisé en ce que** l'on effectue le laminage sous une pression de pressage, qui varie pendant l'opération de laminage.

11. Procédé selon la revendication 10, **caractérisé en ce que** la pression de pressage pendant une phase de chauffage de l'opération de laminage est plus basse que la pression de pressage pendant une phase de maintien à température de l'opération de laminage.

12. Procédé selon l'une des revendications 10 ou 11, **caractérisé en ce que** la pression de pressage est plus basse pendant une phase de chauffage de l'opération de laminage que pendant une phase de refroidissement de l'opération de laminage.

13. Procédé selon l'une quelconque des revendications 1 à 12, **caractérisé en ce que** l'on recouvre au moins une feuille (136) en matériau contenant du métal au moyen d'une feuille de protection (160) pendant l'opération de laminage.

14. Plaque bipolaire pour une batterie au plomb bipolaire (100), comprenant un substrat (134) et au moins une feuille (136) en matériau contenant du métal, qui est laminée avec le substrat (134), **caractérisée en ce que** le substrat (134) comprend au moins une feuille (140) en un composite thermoplastique, qui contient au moins un matériau thermoplastique et au moins une matière de charge électriquement conductrice, dans laquelle la matière de charge électriquement conductrice contient un pigment conducteur, de la suie, du menu carbone et/ou du graphite.

FIG.1

# FIG.2

100

I

126

126

126

174

# FIG.3

100

110  108

112

174

114

116

122

120

116

108

126

112

**FIG.4**

**FIG.5**

108

110

7 · — · — · — 7

**FIG.6**

110

108

**FIG.7**

FIG.8

**FIG.9**

FIG.10

FIG.11

**FIG.12**

EP 2 157 641 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9840920 A
- US 5800946 A
- US 4892797 A
- WO 0008071 A2
- WO 0160911 A1